# FASCICULE DE BREVET EUROPEEN

(11) **EP 2 904 266 B1**
(45) Date de publication et mention de la délivrance du brevet: **27.03.2019**
(21) Numéro de dépôt: 13770956.4
(22) Date de dépôt: 02.10.2013
(51) Int. Cl.: F04B 53/16, F04B 53/08, A47J 31/46

(54) **POMPE À LIQUIDE VOLUMÈTRIQUE CHAUFFANTE**
VOLUMETRISCHE FLÜSSIGKEITSPUMPE MIT HEIZMITTELN
LIQUID VOLUMETRIC HEATING PUMP

(30) Priorité: 05.10.2012 CH 18722012
(43) Date de publication de la demande: 12.08.2015
(73) Titulaire: Gotec SA, 1950 Sion (CH)
(72) Inventeur: GRENON, Vincent, CH-1908 Riddes (CH); ALBRECHT, Denis, CH-1971 Champlan (CH)
(74) Mandataire: P&TS SA (AG, Ltd.)
(86) Numéro de dépôt international: PCT/EP2013/070601
(87) Numéro de publication internationale: WO 2014/053582

(56) Documents cités:
- WO-A1-2010/113116
- WO-A1-2012/069594
- US-A- 4 871 089
- US-A1- 2008 295 698

## Description

### Domaine technique

La présente invention concerne une pompe à liquide comprenant au moins une cartouche chauffante. Cette pompe permet de pomper du liquide, de le chauffer et de faire aussi une mesure de volume.

### Etat de la technique

On connaît de nombreux exemples de pompes à liquide fonctionnant selon différents principes. Il existe par ailleurs différents types de dispositifs de chauffage d'eau. De nombreuses machines à café emploient un réservoir dans laquelle l'eau est préchauffée avant d'être pompée à travers la poudre de café puis versée dans les tasses. Ces dispositifs nécessitent de préchauffer un volume d'eau plus important que celui qui sera finalement utilisé, ce qui occasionne un gaspillage énergétique. Lorsqu'inversement on a besoin d'un volume de café supérieur à la contenance du réservoir, il est nécessaire d'attendre après le remplissage que l'eau nouvellement introduite ait été chauffée.

On connaît par ailleurs des dispositifs de chauffage de liquide en continu dans lesquels l'eau est chauffée lors de son passage dans un tube ou un tuyau. De tels dispositifs sont décrits par exemple dans la demande de brevet EP-A1-1380243 (Nestec SA), qui illustre un module de chauffage de liquide comportant un tube creux revêtu d'au moins deux résistances chauffantes, par exemple des fils ou des encres conductrices déposées sur un substrat. Une solution similaire est aussi décrite dans EP-A1-1097663.

Les solutions de l'art antérieur nécessitent en général une pompe pour faire circuler l'eau dans un tube chauffant ou un thermobloc, et un débitmètre pour contrôler la quantité d'eau fournie. Le dispositif complet comporte donc de nombreuses pièces discrètes distinctes, complexes à combiner, et dont l'assemblage nécessite un volume important. Par ailleurs, la température de l'eau dépend à la fois du courant électrique dans le module de chauffage et du débit de l'eau dans le tube, ce qui nécessite une régulation assez complexe.

La demande de brevet FR2780262 décrit une machine à café comportant une pompe à piston creux animé par un moteur électromagnétique. Le piston creux traversé par le liquide est difficile à nettoyer; en outre, il ne permet pas de déplacer un volume d'eau constant à chaque actionnement. Un débitmètre est donc requis, formé dans ce cas d'une roue folle à ailettes mise en rotation par le flux de liquide.

D'autres exemples de distributeur de boisson chaude comportant une pompe à piston sont décrits dans les brevets US2654505 et FR2012636.

WO2005108849 décrit une pompe pour lubrifiant qui comprend au moins un piston de dosage entrainé par un actionneur qui comporte un élément chauffant. L'élément chauffant chauffe un matériau qui se dilate afin d'entraîner le déplacement du piston de dosage. Cette pompe ne permet pas de chauffer le liquide dans le cylindre.

US3508845 décrit un procédé et un dispositif permettant d'obtenir de hautes pressions avec un compresseur à membrane. L'huile pompée par un piston est chauffée au préalable par une résistance chauffante dans un réservoir. Ce dispositif entraîne des déperditions importantes puisque la chaleur produite par la résistance chauffante est transmise au liquide en amont des pompes.

La demande de brevet EP-A1-496939 (Ricerca Elettromecanica) décrit une autre pompe pour machine à café comportant un piston coulissant dans un cylindre actionné par un moteur et un actuateur. La course du piston, qui détermine le volume de liquide aspiré puis rejeté dans le cylindre, est contrôlée à l'aide de micro-connecteurs ou d'un encodeur connectés au moteur. Les signaux des microswitches ou de l'encodeur sont traités par une électronique qui génère des signaux de commande pour le moteur. Le volume d'eau dans le cylindre est chauffé à l'aide d'un fil résistif bobiné autour de la surface externe du cylindre et parcouru par un courant électrique.

Cet arrangement permet de chauffer le liquide directement à l'intérieur de la pompe, de sorte qu'un tube chauffant additionnel n'est pas requis. Par ailleurs, l'usage d'une pompe à piston permet de contrôler facilement le volume de liquide aspiré, simplement en modifiant la course du piston. Toutefois, la fabrication d'une telle pompe avec un bobinage externe est coûteuse. Il arrive par ailleurs que le fil de cette bobine casse ce qui créé un problème de fiabilité.

Le document WO2009/087203 (Gotec SA) décrit une pompe à liquide comprenant un circuit électrique de chauffage du cylindre avec au moins deux branches afin de chauffer électriquement le liquide dans le cylindre, les branches étant réalisées sous la forme de piste mince électriquement conductrice déposée sur ou dans la paroi du cylindre et occupant des portions longitudinales différentes le long dudit cylindre, afin de contrôler la portion longitudinale du cylindre chauffée en sélectionnant les branches parcourues par un courant en fonction du volume de liquide chauffé à produire.

Grâce à cette pompe il est possible de choisir la portion longitudinale du cylindre qui est chauffée en chaque instant en sélectionnant les branches alimentées en courant. On alimentera donc un nombre de branches qui dépend de la quantité de volume à chauffer, de manière à éviter de dissiper de la chaleur sur de larges portions du cylindre au-dessus de la limite de course supérieure du piston. Dans un exemple, seule la moitié inférieure du cylindre est chauffée avec une branche lorsqu'on souhaite produire un demi-volume de cylindre d'eau chaude.

Cette pompe présente cependant différents inconvénients. Tout d'abord la fabrication industrielle de pistes conductrices sur un cylindre s'avère délicate et onéreuse.

D'autre part, dans le cas d'une installation avec le cylindre en position horizontale, c'est-à-dire lorsque le piston coulisse selon une direction horizontale, et que le cylindre contient peu de liquide, la vapeur qui se forme au-dessus du liquide dans le cylindre peut détruire ou décoller les branches résistives. Une telle installation à l'horizontal est cependant utile pour certaines configurations de machine à café, par exemple dans le cas d'une utilisation dans une voiture, une caravane, un camion ou tout véhicule autonome électriquement.

La position horizontale de la pompe est également avantageuse pour réduire le gradient de la température du liquide, ce qui améliore la qualité du café produit et réduit le gaspillage énergétique.

Une telle utilisation à l'horizontal de la pompe décrite dans WO2009/087203 n'est cependant pas indiquée, puisque son fonctionnement correct est garanti seulement dans le cas où son piston coulisse selon une direction verticale.

WO2012069594 décrit une pompe à liquide volumétrique avec un piston coulissant dans un cylindre de manière à aspirer un liquide dans le cylindre, puis à l'expulser. Au moins une cartouche chauffante est logée au moins partiellement dans un tube de transmission logé dans la tige du piston et plongé dans le liquide afin de chauffer le liquide lorsque du courant circule dans cette cartouche.

De telles cartouches chauffantes sont en soi connues et disponibles dans le commerce à des coûts réduits. Il est ainsi possible de réaliser une pompe à piston chauffante très économique grâce à l'utilisation d'une telle cartouche comme corps de chauffe.

Un inconvénient de cette solution est qu'elle nécessite au moins un joint, par exemple un joint X-Ring entre la cartouche chauffante et le piston ou la tige de piston. Ces joints tendent à s'user, notamment en raison des déplacements du piston autour de la cartouche, de la température élevée de l'eau, et des dépôts de calcaire. Par conséquent ces pompes nécessitent un entretien périodique afin de remplacer ce joint.

Il existe donc un besoin pour une pompe à liquide qui permette de supprimer ou en tout cas réduire ces problèmes de l'art antérieur.

Il existe donc un besoin pour une pompe à liquide qui permette de délivrer un volume d'eau contrôlé avec une température constante tout au long de l'écoulement comme la pompe de WO2009/087203, qui puisse aussi être utilisée quand le piston coulisse selon une direction horizontale, qui puisse être réalisée de manière économique, et qui ne nécessite qu'un minimum d'entretien.

### Bref résumé de l'invention

Un but de la présente invention est d'éviter ou d'atténuer un ou plusieurs inconvénients mentionnés ci-dessus.

Selon l'invention, ces buts sont atteints notamment au moyen d'une pompe à liquide selon la revendication 1.

La pompe selon l'invention comprend un cylindre, un piston coulissant dans ledit cylindre de manière à aspirer un liquide dans ledit cylindre, puis à l'expulser hors dudit cylindre, et au moins une cartouche chauffante logée au moins partiellement dans ou contre les parois dudit cylindre afin de chauffer le liquide dans ledit cylindre.

Cette solution permet donc un chauffage économique des parois du cylindre au moyen de cartouches chauffantes économiques et faciles à insérer dans un cylindre. Elle évite par ailleurs la nécessité de joints autour d'un cylindre immergé.

L'invention part notamment de la constatation que des cartouches chauffantes délivrant une chaleur suffisante pour chauffer un volume de boisson chaude sont disponibles avec des diamètres réduits, par exemple des cartouches avec un diamètre de moins de 8 millimètres, ce qui permet de les intégrer facilement dans les parois d'un cylindre, sans nécessiter une surépaisseur importante.

Dans un mode de réalisation, la pompe comporte trois cartouches chauffantes réparties autour de la périphérie du cylindre. Il est ainsi possible de produire une chaleur de façon homogène autour du volume de liquide aspiré.

La ou les cartouches chauffantes peuvent par exemple être logées dans une respectivement des ouvertures longitudinales dans les parois du cylindre. Le diamètre de ces ouvertures est avantageusement le même que le diamètre externes des cartouches (en négligeant le jeu nécessaire à l'insertion des cartouches). Il est ainsi possible de transmettre avec un minimum de pertes la chaleur générée par la ou les cartouches au corps du cylindre, puis au liquide contenu dans le cylindre.

La pompe peut en outre comporter un ou plusieurs fusibles pour protéger le circuit électrique d'alimentation des cartouches chauffantes. Ce ou ces fusibles peuvent être logés dans ou contre les parois du cylindre, par exemple dans des gorges ménagées à la périphérie du cylindre. Ainsi, le remplacement de ces fusibles et leur connexion aux cartouches chauffantes est aisé depuis l'extérieur du cylindre, sans devoir démonter le piston. Il est possible de connecter un fusible à chaque cartouche chauffante, Il est aussi possible et avantageux de connecter un fusible à la phase et un autre fusible au neutre de chaque cartouche chauffante. Chaque fusible peut être logé dans une gorge distincte. L'ensemble cylindre-piston-corps de chauffe - fusibles constitue ainsi un bloc qui peut être remplacé ou extrait facilement, et les fusibles placés dans des gorges ouvertes ne surchauffent pas.

Le piston peut être entraîné en translation grâce à une vis engagée dans un écrou lié à la tige de piston ; la rotation de la vis produit ainsi le déplacement longitudinal du piston.

Cette pompe peut avantageusement être utilisée dans une machine de production de boisson chaude, par exemple une machine à café.

### Brève description des figures

Des exemples de mise en oeuvre de l'invention sont indiqués dans la description illustrée par les figures annexées dans lesquelles :
La figure 1 illustre une vue en perspective d'un mode de réalisation de la pompe selon l'invention.
La figure 2 illustre une vue de dessus de la pompe de la figure 1.
La figure 3 illustre une vue en coupe de la pompe de la figure 1.

### Exemple(s) de mode de réalisation de l'invention

Dans un mode de réalisation, la présente pompe peut être utilisée en remplacement de celle qui est décrite dans la demande WO2012069594 dont le contenu est ici intégré par référence. Les éléments non modifiés par rapport à cet art antérieur ne sont pas décrits ; par exemple, le mécanisme d'entraînement du piston peut comporter un moteur électrique, une courroie, et une vis du type décrit dans cette demande antérieure, ou être basé sur un autre mécanisme à la portée de l'homme du métier.

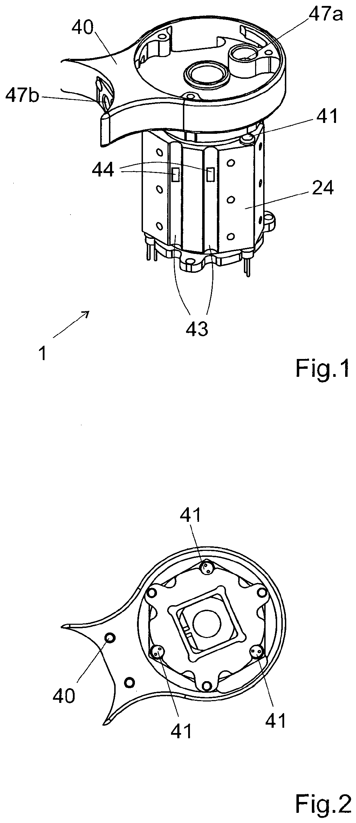

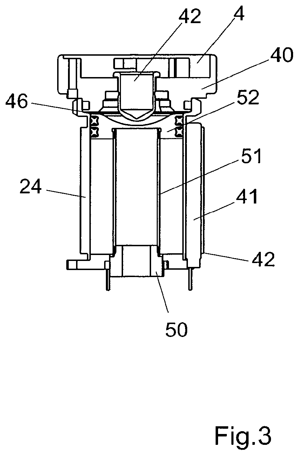

Les figures 1 à 3 illustrent une vue d'ensemble d'un mode de réalisation de la pompe à piston chauffante selon l'invention. La pompe illustrée comprend un cylindre 24 dans lequel coulisse un piston 52 avec sa tige de piston 51. Des joints 46 empêchent les infiltrations d'eau entre la tête de piston 52 et la surface interne du cylindre. La tête de cylindre est fermée par une culasse 4 munies de soupapes d'admission 47a et de soupapes d'expulsion 47b afin d'admettre un liquide froid dans le cylindre lorsque le piston descend, et d'expulser le même liquide chauffé lorsque le piston remonte. L'extrémité inférieure de la tige de piston 51 est munie d'un écrou 50 qui permet de déplacer le piston 52 en faisant tourner une vis d'entrainement (non représentée) dans cet écrou.

Le cylindre 24 est constitué par un bloc produit avantageusement par extrusion, par exemple un bloc d'aluminium ou d'un autre métal facile à extruder et bon conducteur de chaleur. La paroi intérieure du cylindre peut être munie d'un revêtement, par exemple d'un revêtement téflon, afin d'améliorer ses propriétés tribologiques. Les parois du cylindre 24 sont munies d'ouvertures longitudinales 42, au nombre de 3 dans cet exemple, afin d'y loger des cartouches chauffantes 41 parallèlement à la direction de déplacement du piston. Un nombre de cartouches différent, par exemple deux, 4, 5 ou 6 cartouches, peut être prévu.

Les cartouches chauffantes ont une surface externe cylindrique avec un diamètre correspondant à celui des ouvertures 42, de manière à permettre leur insertion tout en maximisant le transfert de la chaleur produite par les cartouches au cylindre. Les cartouches peuvent par exemple avoir un diamètre externe inférieur à 8 millimètres, par exemple un diamètre de 6,5 millimètre.

L'épaisseur de paroi du cylindre est de préférence plus importante là où les cartouches chauffantes 41 sont insérées, et plus faible entre ces cartouches chauffantes. Cela permet de réduire la masse du cylindre, et donc son inertie thermique afin de le chauffer avec un minimum d'apport de chaleur, tout en garantissant que les cartouches soient entièrement logées dans la paroi du cylindre afin de réduire les pertes de charge thermique.

Chaque cartouche peut comprendre une ou plusieurs zones de chauffe, correspondant à un ou plusieurs circuits électriques. Dans une autre variante chaque cartouche peut comprendre une zone progressive de chauffe, correspondant à une résistance bobinée de façon non régulière. De cette façon il est possible non seulement d'obtenir les mêmes effets de chauffage « ad hoc » du liquide selon son volume, en réduisant ainsi le gaspillage énergétique, mais aussi d'utiliser la pompe quand le piston coulisse selon une direction horizontale, ce qui permet une distribution plus homogène de la température dans le liquide à chauffer permettant de ce fait de mieux s'adapter à l'utilisation d'une telle pompe dans une voiture ou une caravane par exemple.

Dans une variante la pompe selon l'invention comprend plusieurs résistances en parallèle dans la même cartouche chauffante, voire plusieurs cartouches chauffantes, pour chauffer plus rapidement une plus grande quantité de liquide. De cette façon il est ainsi possible d'allumer une machine à café comprenant une telle pompe et d'obtenir un chauffage quasi instantané. Par exemple, il est possible de monter trois cartouches chauffantes espacées angulairement de 120°, ou quatre cartouches chauffantes espacées de 90°, dans un seul volume d'eau ou dans plusieurs volumes d'eau indépendants, ou traversés successivement par la même portion de liquide.

Dans une autre variante chaque cartouche chauffante comprend un capteur de température pour mesurer la température du liquide : à la différence des solutions connues, cette mesure est efficace et précise, puisqu'elle est effectuée au centre du volume de liquide chauffé.

Dans une autre variante la pompe comprend un capteur de position, par exemple un capteur angulaire agencé pour coopérer avec les dents d'une poulie menante qui met en rotation à travers un moteur électrique une vis de poussée permettant de déplacer le piston, afin de mesurer la position du piston et, donc, combien de liquide a été aspiré et/ou expulsé. Une barrière lumineuse et/ou un interrupteur peut avantageusement être prévue sur le tube de transmission pour déterminer le point zéro de la course du piston.

Des fusibles 44 sont avantageusement prévus pour limiter le courant électrique dans les cartouches chauffantes 41. Dans un mode de réalisation avantageux, un fusible 44 est connecté en série dans la phase de chaque cartouche chauffante 41 et un autre fusible 44 est connecté en série avec le neutre de chaque cartouche chauffante 41. Les fusibles sont avantageusement montés contre la surface externe du cylindre 24, par exemple dans des logements 43 conformés en gorge longitudinale dans les flancs externes du cylindre 24. Cela permet de lier les fusibles au cylindre, qui peut donc être monté et démonté avec les cylindres, tout en plaçant des fusibles dans une zone facilement accessible et moins chaude du cylindre.

Dans un mode de réalisation préférentiel, la course du piston 52 peut être contrôlée afin de varier la quantité de liquide aspirée puis expulsée. La course est de préférence contrôlée par un microcontrôleur non représenté en modifiant la durée d'alimentation du moteur entraînant la vis engagée dans l'écrou 50. La commande peut être effectuée en circuit ouvert, c'est-à-dire en appliquant une durée d'impulsion qui dépend uniquement de la valeur de consigne choisie pour la course et le volume, ou de préférence en circuit fermé avec une boucle de contre-réaction prenant en compte une valeur de mesure fournie par un capteur de position.

Avantageusement la pompe comprend un circuit électronique non représenté, par exemple un microcontrôleur contrôlé par un programme d'ordinateur ou un circuit FPGA, qui commande de préférence les événements suivants :
- Ouverture et fermeture des soupapes d'admission et d'expulsion.
- Alimentation du moteur d'actionnement de la vis provoquant le déplacement du piston 52
- Commande des différentes zones chauffantes de chaque cartouche chauffante 41
- Prise en compte des signaux fournis par un capteur de position du piston, par un capteur de température, et par un circuit de commande non représenté permettant d'introduire des valeurs

de consigne pour le volume à chauffer et/ou la température à obtenir.

Il est également possible d'employer un piston à double effet, qui aspire et refoule le liquide en continu afin de réduire le temps de tirage. Dans ce cas la pompe comprendra deux culasses, deux soupapes d'admission et deux soupapes d'expulsion.

Le dispositif et le procédé de l'invention peuvent être employés par exemple pour un distributeur de boisson chaude, notamment une machine à café, y compris une machine à café pour voiture ou caravane ou mobil-home, ou tous véhicules autonomes électriquement tels qu'avions, taxi, trains, bateaux, etc. Une pompe similaire peut aussi être employée pour le dosage de liquide chauffé, dans l'industrie alimentaire, pour le collage avec une colle chauffée, pour l'évacuation de condensats, etc.

### Numéros de référence employés sur les figures

- 1: Pompe
- 24: Cylindre
- 4: Première pièce ou culasse complète (ensemble soupapes, joints et cartouche)
- 40: Culasse
- 41: Cartouche chauffante
- 42: Ouverture longitudinale
- 43: Logements pour fusibles (gorges)
- 44: Fusibles
- 46: Joint O-ring ou X-Ring
- 47a, 47b: Soupapes
- 50: Ecrou
- 51: Tige de piston
- 52: Piston

## Revendications

1. Pompe à liquide (1) comprenant :
- un cylindre (24)
- un piston (52) coulissant contre la face interne dudit cylindre (24), de manière à aspirer un liquide dans ledit cylindre (24), puis à l'expulser hors dudit cylindre (24)
**caractérisée par** au moins une cartouche chauffante (41) de forme cylindrique, avec un diamètre inférieur à celui dudit cylindre, logée au moins partiellement dans les parois dudit cylindre ou contre les parois externes dudit cylindre (51) afin de chauffer le liquide dans ledit cylindre (24).

2. Pompe selon la revendication 1, **caractérisée par** au moins trois cartouches chauffantes (41) réparties autour de la périphérie dudit cylindre.

3. Pompe selon l'une des revendications 1 ou 2, **caractérisée en ce que** ledit cylindre (24) comporte au moins une ouverture longitudinale (42) ayant le même diamètre que ladite cartouche chauffante (41), ladite cartouche chauffante étant logée dans ladite ouverture longitudinale.

4. Pompe selon l'une des revendications 1 à 3, comportant au moins un fusible (44) logé au moins partiellement dans ou contre les parois dudit cylindre (24), ledit fusible étant lié en série avec ladite cartouche chauffante.

5. Pompe selon la revendication 4, **caractérisée en ce que** ledit cylindre (24) comporte au moins un logement (43) sur sa périphérie externe pour y loger ledit fusible (44).

6. Pompe selon la revendication 5, **caractérisée en ce que** ledit cylindre (24) comporte au moins trois logements constitués par des gorges longitudinales (43) pour y loger au moins trois fusibles (44) afin de protéger individuellement au moins trois cartouches chauffantes (41).

7. Pompe selon l'une des revendications 1 à 6, **caractérisée par** une tige de piston (51) munie d'un écrou (50) permettant de faire coulisser ledit piston au moyen d'une vis d'entraînement.

8. Pompe selon l'une des revendications 1 à 7, ledit cylindre (24) étant constitué par un bloc d'aluminium extrudé.

9. Machine de production de boisson chaude munie d'une pompe selon l'une des revendications précédentes.

## Patentansprüche

1. Flüssigkeitspumpe (1), umfassend:
- einen Zylinder (24);
- einen Kolben (52), der gegen die Innenfläche des besagten Zylinders (24) gleitet, um eine Flüssigkeit in den besagten Zylinder (24) zu ziehen und dann aus dem besagten Zylinder (24) auszutreiben,
**gekennzeichnet durch** mindestens eine Heizpatrone (41) zylindrischer Form, mit einem Durchmesser kleiner als derjenige des besagten Zylinders, und welche mindestens teilweise in den Wänden des besagten Zylinders oder gegen die Aussenwände des besagten Zylinders (51) untergebracht ist, um die Flüssigkeit im besagten Zylinder (24) zu erwärmen.

2. Pumpe gemäss Anspruch 1, **gekennzeichnet durch** mindestens drei Heizpatronen (41), welche um den Umfang des besagten Zylinders herum verteilt sind.

3. Pumpe gemäss einem der Ansprüche 1 oder 2, **dadurch gekennzeichnet, dass** der besagte Zylinder (24) mindestens eine Längsöffnung (42) aufweist, welche den gleichen Durchmesser wie die besagte Heizpatrone (41) aufweist, wobei die besagte Heizpatrone in der besagten Längsöffnung untergebracht ist.

4. Pumpe gemäss einem der Ansprüche 1 bis 3, mit mindestens einer Sicherung (44), welche mindestens teilweise in den Wänden oder gegen die Wände des besagten Zylinders (24) untergebracht ist, wobei die besagte Sicherung seriell mit der besagten Heizpatrone verbunden ist.

5. Pumpe gemäss Anspruch 4, **dadurch gekennzeichnet, dass** der besagte Zylinder (24) an seinem Aussenumfang mindestens ein Gehäuse (43) aufweist, um darin die besagte Sicherung (44) aufzunehmen.

6. Pumpe gemäss Anspruch 5, **dadurch gekennzeichnet, dass** der besagte Zylinder (24) mindestens drei Gehäuse aufweist, die durch Längsnuten (43) gebildet sind, um darin mindestens drei Sicherungen (44) unterzubringen, um mindestens drei Heizpatronen (41) einzeln zu schützen.

7. Pumpe gemäss einem der Ansprüche 1 bis 6, **gekennzeichnet durch** eine Kolbenstange (51), welche mit einer Mutter (60) versehen ist, die es dem besagten Kolben ermöglicht, mittels einer Antriebsschraube zu gleiten.

8. Pumpe gemäss einem der Ansprüche 1 bis 7, wobei der besagte Zylinder (24) aus einem Block aus extrudiertem Aluminium besteht.

9. Maschine zur Herstellung von Heissgetränken, welche mit einer Pumpe gemäss einem der vorhergehenden Ansprüche versehen ist.

## Claims

1. Liquid pump (1) comprising:
- a cylinder (24);
- a piston (52) sliding against the inner face of said cylinder (24) so as to draw a liquid into said cylinder (24) and then to expel it from said cylinder (24),
**characterized by** at least one heating cartridge (41) of cylindrical shape, with a diameter less than that of said cylinder, lodged at least partly in the walls of said cylinder or against the outer walls of said cylinder (51) in order to heat the liquid in said cylinder (24).

2. Pump according to claim 1, **characterized by** at least three heating cartridges (41) distributed around the periphery of said cylinder.

3. Pump according to one of the claims 1 or 2, **characterized in that** said cylinder (24) comprises at least one longitudinal opening (42) having the same diameter as said heating cartridge (41), wherein said heating cartridge is lodged in said longitudinal opening.

4. Pump according to one of the claims 1 to 3, comprising at least one fuse (44) lodged at least partly in or against the walls of said cylinder (24), wherein said fuse is connected serially with said heating cartridge.

5. Pump according to claim 4, **characterized in that** said cylinder (24) comprises at least one housing (43) on its outer periphery for housing therein said fuse (44).

6. Pump according to claim 5, **characterized in that** said cylinder (24) comprises at least three housings constituted by longitudinal grooves (43) for lodging therein at least three fuses (44) in order to protect individually at least three heating cartridges (41).

7. Pump according to one of the claims 1 to 6, **characterized by** a piston rod (51) provided with a nut (50) allowing said piston to slide by means of a driving screw.

8. Pump according to one of the claims 1 to 7, wherein said cylinder (24) is constituted by a block of extruded aluminum.

9. Machine for producing hot drinks provided with a pump according to one of the preceding claims.
